# EUROPÄISCHE PATENTSCHRIFT

(11) **EP 3 521 810 B1**
(45) Veröffentlichungstag und Bekanntmachung des Hinweises auf die Patenterteilung: **27.11.2019**
(21) Anmeldenummer: 18154509.6
(22) Anmeldetag: 31.01.2018
(51) Int. Cl.: G01N 21/49, G01N 21/31, G01N 15/00, G01N 15/14, G01N 21/47, G01N 15/02

(54) **ANALYSEGERÄT ZUR BESTIMMUNG VON FEINSTAUB**
ANALYSER FOR THE DETERMINATION OF FINE DUST
APPAREIL D'ANALYSE PERMETTANT DE DÉTERMINER DE FINES POUSSIÈRES

(43) Veröffentlichungstag der Anmeldung: 07.08.2019
(73) Patentinhaber: SICK Engineering GmbH, 01458 Ottendorf-Okrilla (DE)
(72) Erfinder: Schladitz, Alexander, 01326 Dresden (DE); Klinder, Kai, 01458 Ottendorf-Okrilla (DE)
(74) Vertreter: Ludewigt, Christoph

(56) Entgegenhaltungen:
- EP-A2- 0 493 806
- WO-A1-2014/065694
- DE-B3-102012 106 322
- US-A- 5 104 221
- US-A1- 2017 011 499
- LISENKO S A AND KUGEIKO M M: "Nephelometric method for measuring mass concentrations of urban aerosols and their respirable fractions", ATMOSPHERIC AND OCEANIC OPTICS, Bd. 27, Nr. 6, 2014, Seiten 587-595, XP055440723, RU ISSN: 1024-8560, DOI: 10.1134/S102485601406013X
- GAYET J F ET AL: "A new airborne polar Nephelometer for the measurements of optical and microphysical cloud properties. Part I: Theoretical design", ANNALES GEOPHYSICAE, SPRINGER, BERLIN, DE, Bd. 15, Nr. 4, 1997, Seiten 451-459, XP019350258, ISSN: 1432-0576, DOI: 10.1007/S00585-997-0451-1
- GROLIK B AND KOPP J: "Lichtstreuung", , 2 January 2003 (2003-01-02), XP055555642, Retrieved from the Internet: URL:http://home.fnal.gov/~jkopp/tum/pdf/A/ str.pdf [retrieved on 2019-02-12]
- WEST R A ET AL: "Laboratory measurements of mineral dust scattering phase function and linear polarization", JOURNAL OF GEOPHYSICAL RESEARCH, vol. 102, no. D14, 27 July 1997 (1997-07-27), pages 16871-16881, XP055591245, US ISSN: 0148-0227, DOI: 10.1029/96JD02584

## Beschreibung

Die Erfindung betrifft ein optisches Analysegerät zur Bestimmung von Feinstaub nach dem Oberbegriff des Anspruchs 1.

Feinstaub ist derzeit ein aktuelles Thema. Unter Feinstaub werden kleinste Partikel verstanden, deren Größe (aerodynamischer Durchmesser) weniger als 10 µm beträgt.

Feinstäube werden charakterisiert mit PM₁₀, PM_{2.5} und PM₁. Die als Feinstaub PM₁₀ bezeichnete Staubfraktion enthält 50% der Teilchen mit einem Durchmesser von 10 µm, einen höheren Anteil kleinerer Teilchen und einen niedrigeren Anteil größerer Teilchen. Die als Feinstaub PM_{2.5} bezeichnete Staubfraktion enthält 50% der Teilchen mit einem Durchmesser von 2,5 µm, einen höheren Anteil kleinerer Teilchen und einen niedrigeren Anteil größerer Teilchen. PM_{2.5} ist eine Teilmenge von PM₁₀. Für PM₁ beträgt der Durchmesser 1 µm.

Da Feinstäube gesundheitliche Risiken bergen, ist es wichtig Feinstäube zu vermeiden oder zu reduzieren. Um die richtigen Maßnahmen zu treffen und kontrollieren zu können, ist es unerlässlich die Größenverteilung des Feinstaubs zu kennen und die Massenanteile der Feinstäube PM₁₀, PM_{2.5} und PM₁.

Die Anforderungen an die Bestimmung von Feinstäuben nehmen ständig zu, denn die Filteranlagen von emittierenden Anlagen, wie Kohlekraftwerke, werden immer besser, so dass die Konzentrationen sinken, aber gleichzeitig werden die Grenzwerte immer schärfer, z.B. durch die 2016 verabschiedete Neufassung der Richtlinie über nationale Emissionshöchstmengen (NEC-Richtlinie), die um eine Vorgabe für 2030 ergänzt wurde, wonach bis 2030 die deutschen PM_{2.5}-Emissionen um 43% gegenüber 2005 sinken müssen. Es müssen also immer kleinere Konzentrationen bestimmt und analysiert werden.

Weltweit werden kontinuierlich messende automatische Messsysteme (AMS) zur Überwachung von Partikelemissionen oder -immissionen eingesetzt. In der Praxis muss ein AMS an seiner Installationsstelle mittels einer gravimetrischen Standardreferenzmethode (SRM) kalibriert werden, um die reine Streulichtinformation des AMS in reale Staubmassenkonzentrationen zu übersetzen. Für kleine Staubmassenkonzentrationen (∼ 1 mg/m³) wird diese Kalibrierung in der Praxis immer schwieriger bei größer werdender Ungenauigkeit. Es werden weltweit enorme Anstrengungen unternommen, z.B. durch künstliche Erhöhung der Staubkonzentration durch Injektion von zusätzlichem Staub oder durch Reduzierung der Abgasreinigungswirkung, um so die Werte der SRM Messung über die Detektionsschwelle zu bringen. Alternativ erlaubt der Gesetzgeber in Europa eine Verlängerung der Messzeit, um sehr kleine Staubkonzentrationen besser zu quantifizieren oder er erlaubt im Ausnahmefall die Verwendung von sogenannten Ersatzstoffen, deren Partikelgrößenverteilung dem des Abgases ähnlich ist.

Nachteilig ist, dass diese Verfahren keine echten Lösungen für das Messproblem darstellen, denn im Gegenteil erhöhen sie die Kosten für den Anlagenbetreiber für die initiale Kalibrierung oder die regelmäßige Funktionsprüfung. Zusätzlich kann mit derzeitigen AMS keine größenaufgelöste Information der Staubkonzentration erhalten werden.

Aus der EP 0 391 256 B1 ist ein Analysegerät zur Bestimmung einer Partikelgrößenverteilung bekannt, bei dem die 90° Streulicht-Technologie eingesetzt wird. Die Partikelgröße wird über seitlich gestreutes Licht bestimmt. Das Streulicht wird detektiert und als Spannungssignal gemessen. Mittels einer Kalibrationsfunktion kann von dem Spannungssignal auf eine Partikelgröße geschlossen werden. Die Anzahl an Partikel wird über das gleiche Signal erhalten, indem Pulse des Signals gezählt werden. Die nach Partikelgröße getrennte Partikelmassenkonzentration wird durch Volumenintegration der gemessenen Partikelanzahlgrößenverteilungskurve berechnet.

Der größte Nachteil dieser 90° Streulichttechnologie ist, dass das Streulicht einzelner Partikel gemessen wird. Dazu benötigt man Einzelpartikel, die im Messvolumen vorliegen müssen und somit als Einzelpartikel in das Messvolumen eingebracht werden müssen. Das ist aufwändig und bringt zudem weitere Probleme mit sich, wie niedrige Partialdrücke und Zuführung von Trägergas (zur Verdünnung) und damit eine mögliche Verfälschung der Messergebnisse.

Eine weitere Technik zur Partikelgrößenanalyse ist die Laserlichtbeugung (laser diffraction technology). Die Wechselwirkung von Laserlicht mit Partikeln führt zu charakteristischen Streumustern. Diese Streumuster hängen von der Partikelgröße, den optischen Eigenschaften der Partikel, der Dispersion und der Wellenlänge des einfallenden Lichts ab. Große Partikel streuen Licht eher in Richtung kleiner Streuwinkel. Ein Analysegerät braucht daher hohe Auflösung in Vorwärtsrichtung aber auch in Richtung großer Streuwinkel für seitlich und zurückgestreutes Licht. Ein bekanntes Analysegerät ist das HORIBA LA-960, das in Vorwärtsrichtung einen Vielelemente-Ringdetektor und eine Vielzahl weiterer Einzeldetektoren zur Seite hin und in Rückwärtsrichtung aufweist und damit Großteile des gesamten Messbereichs erfasst. Zusätzlich werden zwei Lichtquellen mit unterschiedlicher Wellenlänge (650nm bzw. 405nm) verwendet, wodurch die Empfindlichkeit für kleinere Partikel (Nanopartikel) erhöht wird.

Der größte Nachteil der Laserlichtbeugung (laser diffraction technology) ist, dass das Gerät keine absolute Partikelgrößenverteilung (in physikalischen Einheiten, z.B. µg/m³) ausgibt. Stattdessen liefern solche Geräte eine relative Größenverteilungsfunktion und eine kumulative Größenverteilung von 0 bis 100%. Damit kann weder eine Partikelmassenkonzentration noch Massenanteile der Feinstäube, d.h. PM₁, PM_{2.5} oder PM₁₀, erhalten werden.

Ein dem Analysegerät HORIBA LA-960 ähnliches Gerät ist auch in EP 0493806 A2 beschrieben.

In dem Artikel LISENKO S A AND KUGEIKO M M: "Nephelometrie method for measuring mass concentrations of urban aerosols and their respirabie fractions", ATMOSPHERIC AND OCEANIC OPTICS, Bd. 27, Nr. 6, 2014, Seiten 587-595, wird ein System beschrieben, das auf einer theoretischen Arbeit basiert, um mit Hilfe zweier Winkelanordnungen und zweier Wellenlängen die Staubkonzentrationswerte PM1, PM2.5 und PM10 mit Hilfe einer linearen Regression aus den Detektordaten berechnen zu können.

US 2017011499 A1 beschreibt eine Möglichkeit der Vereinigung von drei Lichtstrahlen unterschiedlicher Wellenlängen auf einen gemeinsamen optischen Pfad mittels Teilerspiegeln.

US 5104221 A offenbart ein weiteres Analysegerät, bei dem in erster Linie nur um einen Streuwinkel von 90° gemessen wird.

GAYET et al: "A new airborne polar Nephelometer for the measurements of optical and microphysical cloud properties. Part I: Theoretical design", ANNALES GEOPHYSICAE, SPRINGER, BERLIN, DE, Bd. 15, Nr. 4, 1. April 1997 (1997-04-01), Seiten 451-459, XP019350258, ISSN: 1432-0576, DOI: 10.1007/800585-997-0451-1, beschreibt ein Messgerät zur Messung der Streuphasenfunktion von Wassertropfen und Eiskristallen im Bereich von wenigen µm bis 500µm mit einer großen Vielzahl von Detektoren quasi kontinuierlich über den gesamten Winkelbereich und mit einem Vorwärtsdetektor. Das Gerät ist nicht konzipiert, um eine Größenverteilung daraus abzuleiten.

WO 2014/065694 A1 beschreibt ein weiteres optisches Messgerät, bei dem unter vier verschiedenen Streuwinkeln das Streulicht gemassen wird.

WEST et al: "Laboratory measurements of mineral dust scattering phase function and linear polarization", JOURNAL OF GEOPHYSICAL RESEARCH, Bd. 102, Nr. D14 (1997-07-27), XP055591245, US ISSN: 0148-0227, DOI: 10.1029/96J D02584, beschreibt ein Messgerät zur Messung der Lichtstreuung an kleinen Partikeln. Wie in dem oben beschriebenen Dokument Gayet et al wird auch hier fast der gesamte Streuwinkelbereich von 0° bis 180° quasi kontinuierlich sehr aufwändig gemessen. Dazu sind 210 Einzeldetektoren vorgesehen, die auf sechs Zeilenarrays mit je 35 Detektorelementen verteilt sind. Sechs Optiken bilden den gesamten Winkelbereich auf die Detektorelemente ab.

Ausgehend von diesem Stand der Technik ist es Aufgabe der Erfindung, ein verbessertes Analysegerät bereitzustellen, mit dem die vorgenannten Nachteile vermieden werden können.

Diese Aufgabe wird gelöst durch ein optisches Analysegerät zur Bestimmung von Feinstaub mit den Merkmalen des Anspruchs 1.

Das erfindungsgemäße Analysegerät umfasst
- drei Lichtquellen zur Aussendung von drei Sendelichtstrahlen mit unterschiedlichen Wellenlängen,- eine Vorrichtung zur Vereinigung der drei Sendelichtstrahlen auf einen gemeinsamen optischen Weg,
- ein Messvolumen in das mit Feinstaub beladenes Gas einleitbar ist und in dem das Sendelicht auf das zu messende Gas trifft und an dem Feinstaub gestreut wird, und in dem Messvolumen ein Mittelpunkt definiert ist, von dem aus Streuwinkel definiert sind, wobei die optische Achse in Vorwärtsstreurichtung den Streuwinkel 0° definiert,
- eine Lichtabsorptionsvorrichtung bei 0°, die ungestreutes Licht erfasst,
- einen ersten Detektor, der zwischen 0° und 6° unmittelbar neben der Lichtabsorptionsvorrichtung angeordnet ist (kleinster möglicher Winkel je nach Abmessungen typischerweise 6°) und der Streulicht in Vorwärtsrichtung erfasst,
- einen zweiten Detektor, der in einem zweiten Streuwinkel bei 28° angeordnet ist,
- einen dritten Detektor, der in einem dritten Streuwinkel bei 61° angeordnet ist,
- einen vierten Detektor, der in einem vierten Streuwinkel bei 96° angeordnet ist,
- einen fünften Detektor, der in einem fünften Streuwinkel bei 128° angeordnet ist,
- einen sechsten Detektor, der in einem sechsten Streuwinkel bei 155 angeordnet ist, so dass die Detektoren Streulicht in dem jeweiligen Winkel erfassen,
- wobei jeder Detektor eine Optik aufweist, die das Licht aus einem Streuwinkeltoleranzbereich von +/- 1° erfasst und auf den jeweiligen Detektor fokussiert,
- eine Steuer- und Auswerteeinheit, die die Lichtquellen ansteuert, so dass das Streulicht wellenlängenselektiv von den Detektoren erfasst wird,
- einen Speicher zur Speicherung der erfassten Streulichtintensitäten,
- und die Steuer- und Auswerteeinheit derart ausgebildet ist, dass aus den Streulichtintensitäten die Größenverteilung des Feinstaubs (PSD) und Feinstaubmassenanteile (PM) bestimmbar sind.

Mit diesen Merkmalen kombiniert die Erfindung einige Vorteile der 90° Streulichttechnologie der Laserbeugungstechnologie, wobei jedoch die beschriebenen Nachteile vermieden sind. Insbesondere
- werden drei verschiedene Wellenlängen (z.B. eine im UV-Bereich, eine im sichtbaren Bereich und eine im nahen Infrarot) eingesetzt, um die Nachweiswahrscheinlichkeit von kleineren Partikeln, z.B. aus Verbrennungsprozessen, weiter zu erhöhen,
- wird linear polarisiertes Licht eingesetzt, wodurch die Berechnung der Partikelgrößenverteilung aus den gemessenen Streulichtintensitäten verbessert werden kann,
- kann eine absolute Detektorsignalkalibrierung mittels Referenzpartikeln mit bekannter Partikelgrößenverteilung erfolgen,
- werden ein Vielzahl Detektoren in Vorwärts-, Seitwärts- und Rückwärtsstreuungsrichtung eingesetzt, wodurch das Streusignalmuster besser erfasst werden kann und damit kleinere Partikel aus Verbrennungsprozessen erfasst werden können.

Mit dem erfindungsgemäßen Analysegerät können die Feinstaubmassenanteile PM₁, PM_{2.5}, und PM₁₀ und die Gesamtstaubkonzentration kontinuierlich bestimmt werden.

Kern der Erfindung sind die Winkelpositionen der Detektoren. Nur mit wenigstens sechs Detektoren in den genannten Winkelbereichen lassen sich die Vorteile erzielen.

Die Winkelbereiche wurden gefunden, indem anhand künstlicher Partikel mit bekannter Partikelform und bekannter Größenverteilung berechnet wurde, zu welchem Satz Detektorpositionen maximale Differenzen in den Detektorsignalen auftreten, so dass im normalen Betrieb dann verschiedene Größenverteilungen optimal voneinander unterschieden und somit bestimmt werden können, was weiter unten noch genauer beschrieben ist.

Weitere Ausgestaltungen sind Gegenstand der abhängigen Ansprüche.

So können beispielsweise die Sendelichtstrahlen aufgeweitet sein und im Bereich des Messvolumens einen Durchmesser von etwa 4 mm aufweisen. Dadurch ist das Messvolumen entsprechend groß, so dass eine höhere Streulichtausbeute möglich ist, die die Nachweisegrenze hin zu kleineren Massenkonzentrationen verbessert.

Im Folgenden wird die Erfindung anhand von Ausführungsbeispielen unter Bezugnahme auf die Zeichnung im Einzelnen erläutert. In der Zeichnung zeigen:
- Fig. 1: eine schematische Darstellung des erfindungsgemäßen Analysegeräts;
- Fig. 2: eine weitere Ausführungsform des Analysegeräts.

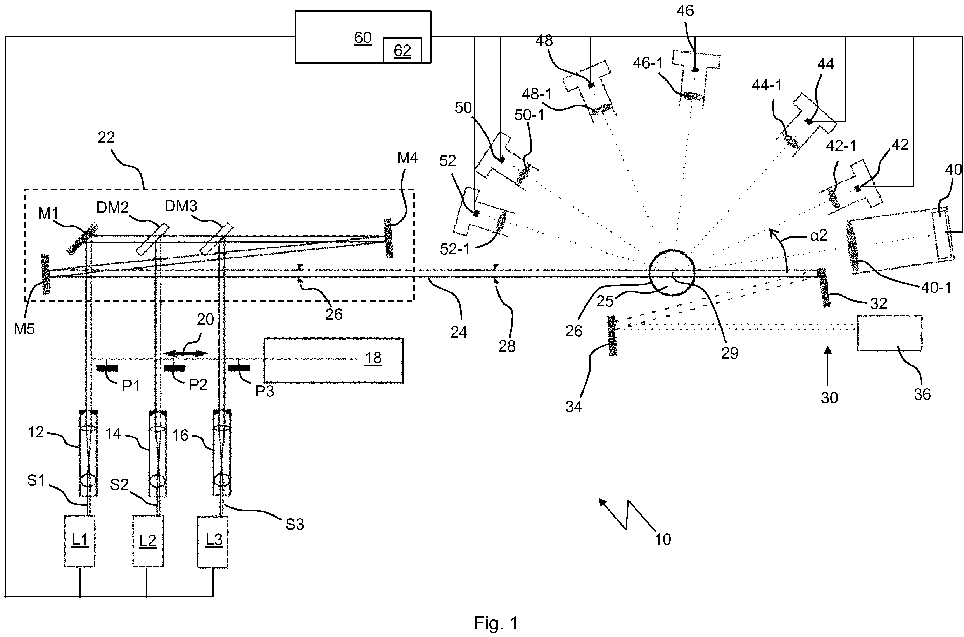

Ein in Fig. 1 dargestelltes, erfindungsgemäßes Analysegerät 10 umfasst drei Lichtquellen L1, L2, L3, die vorzugsweise als Diodenlaser ausgebildet sind und Sendelichtstrahlen S1, S2, S3 gebündelt aussenden. Die Wellenlängen der drei Diodenlaser sind unterschiedlich und liegen vorzugsweise im UV- bzw. sichtbaren bzw. nahen Infrarot-Bereich. In diesem Ausführungsbeispiel hat der erste Sendelichtstrahl eine Wellenlänge im Bereich von 600 bis 650 nm, der zweite Sendelichtstrahl S2 im Bereich von 900 bis 950 nm und der dritte Sendelichtstrahl S3 im Bereich von 400 bis 450 nm. Jeder Sendelichtstrahl S1, S2, S3 wird in einer jeweiligen Strahlaufweitungsoptik 12, 14, 16 im Durchmesser auf vorzugsweise etwa 4 mm erweitert. Die Strahlaufweitungsoptiken 12, 14, 16 bestehen je aus einer Linse mit kurzer und einer mit langer Brennweite und einer Blende.

Mittels Polfiltern P1, P2, P3, deren Polarisationsrichtung gleich ausgerichtet ist, wird das Sendelicht zu 100% linear polarisiert, wobei die Polarisationsrichtung waagerecht zur Zeichenebene der Fig. 1 liegt, also waagerecht zur Streuebene, in der die weiter unten erläuterten Detektoren liegen. Die Polfilter P1, P2, und P3 können mittels eines Aktuators 18 in Richtung 20 optional aus den Strahlengängen entfernt oder in die Strahlengänge gebracht werden.

Die noch separaten Strahlengänge S1, S2, S3 werden in einer Vorrichtung 22 auf einen gemeinsamen optischen Weg 24 vereinigt. Die Vorrichtung 22 besteht in dem Ausführungsbeispiel nach Fig. 1 aus mehreren Spiegeln. Ein erster hochreflektierender, silberbeschichteter Spiegel M1 lenkt den ersten Sendelichtstrahl S1 um 90° um. Dichroitische zweite und dritte Spiegel DM2 und DM3 sind für den ersten Lichtstrahl S1 transparent. Der zweite Lichtstrahl S2 wird von dem zweiten Spiegel DM2 ebenfalls um 90° umgelenkt, so dass erster und zweiter Sendelichtstrahl sich auf einem gemeinsamen optischen Weg befinden. Nach gleichem Prinzip erfolgt die Strahlvereinigung an dem dritten Spiegel DM3, so dass am Ende alle drei Sendelichtstrahlen auf gleichem optischen Weg liegen. Zwei weitere Spiegel M4 und M5 führen die auf dem gemeinsamen optischen Weg befindlichen Sendelichtstrahlen schließlich in ein Messvolumen 25, wobei nicht auf der optischen Achse liegendes und damit störendes Licht mittels Blenden 26 und 28 geblockt wird.

Das Messvolumen 25 wird definiert durch die Sendelichtstrahlen S1, S2, S3, die auf demselben optischen Weg 24 eine Küvette 26 durchqueren. Die Küvette 26 dient zur Durchleitung von zu messendem und Feinstaubpartikel enthaltendem Gas. In dem Messvolumen 25 ist ein Mittelpunkt 29 definiert, von dem aus Streulichtwinkel α definiert sind, wobei das Streulicht durch Lichtstreuung an den Feinstaubpartikeln erzeugt wird. Der Nullpunkt der Streulichtwinkel ist hier durch die optische Achse (den gemeinsamen optischen Weg) in Vorwärtsstreurichtung definiert.

Das ungestreute Licht, das eine Messung von Streulicht stören würde, wird, wie in dem dargestellten Ausführungsbeispiel gezeigt, dreistufig in einer Lichtabsorptionsvorrichtung 30 absorbiert. Zunächst wird das ungestreute Licht bei 0° auf einen Neutraldichtefilter 32 geführt, der eine hohe optische Dichte besitzt und nur ca. 0,001 % reflektiert. Das so reflektierte Restlicht fällt auf einen zweiten Neutraldichtefilter 34 mit gleicher optischer Dichte. Das dann noch übrigbleibende Licht wird in einer Lichtfalle 36 absorbiert.

Um den Mittelpunkt 29 herum sind Detektoren zur Detektion von Streulicht in bestimmten Streulichtwinkeln α in einer gemeinsamen Ebene, in dem Ausführungsbeispiel nach Fig. 1 ist das die Zeichenebene, angeordnet.

Ein erster Detektor 40 ist möglichst nahe 0° angeordnet. Da die Sendelichtstrahlen eine gewisse Breite haben, hier 4 mm, und unter 0° das ungestörte Licht einfällt und dieses mit der Lichtabsorptionsvorrichtung 30 absorbiert werden muss, ist der erste Detektor 40 unmittelbar neben dem absorbierenden Neutraldichtefilter 32, der selbst eine gewisse Ausdehnung hat, angeordnet. Ein typischer kleinster Streuwinkel, der aufgrund dieser Geometrien möglich ist, liegt im Bereich von α = 6°. Dieser erste Detektor 40 erfasst somit Streulicht in Vorwärtsrichtung. Der erste Detektor 40 kann ein einfacher Photodetektor sein und ist aber vorzugsweise als integrierender CMOS Zeilensensor mit beispielsweise 2048 Pixeln ausgebildet.

Weitere Detektoren sind wie folgt angeordnet:
- ein zweiter Detektor 42 in einem zweiten Streuwinkel α2 zwischen 7° und 40°, vorzugsweise zwischen 23° und 33° und insbesondere bei etwa 28°,
- ein dritter Detektor 44 in einem dritten Streuwinkel α3 zwischen 41° und 70°, vorzugsweise zwischen 56° und 66° und insbesondere bei etwa 61°,
- ein vierter Detektor 46 in einem vierten Streuwinkel α4 zwischen 71° und 115°, vorzugsweise zwischen 91° und 101° und insbesondere bei etwa 96°,
- ein fünfter Detektor 48 in einem fünften Streuwinkel α5 zwischen 116° und 145°, vorzugsweise zwischen 125° und 135° und insbesondere bei etwa 128°,
- ein sechster Detektor 50 in einem sechsten Streuwinkel α6 zwischen 146° und 180°, vorzugsweise zwischen 145° und 165° und insbesondere bei etwa 155°.

Vorzugsweise ist ein siebter Detektor 52 in einem siebten Streuwinkelbereich α7 zwischen 166° und 180°, insbesondere bei 170°, angeordnet. Fünfter, sechster und siebter Detektor messen also in Rückwärtsstreurichtung.

Jedem Detektor ist eine Empfangsoptik 40-1, 42-1, 44-1, 46-1, 48-1, 50-1 bzw. 52-1 zugeordnet, die das Streulicht jeweils aus einem Streuwinkeltoleranzbereich von etwa +/- 1° erfasst und auf den jeweiligen Detektor fokussiert, so dass z.B. der Detektor 44, wenn er bei 61° angeordnet ist, das Streulicht erfassen kann, dass in den Winkelbereich von 60° bis 62° emittiert wird.

Des Weiteren umfasst das Analysegerät 10 eine Steuer- und Auswerteeinheit 60, die einerseits die Lichtquellen L1, L2, L3 ansteuert und andererseits die Detektorsignale aufnimmt und aus diesen mittels geeigneter Algorithmen die Auswertung durchführt und letzten Endes die Größenverteilung des Feinstaubs (Particle Size Distribution PSD) bestimmt und die Feinstaubmassenanteile (also die PMx Werte) bestimmt. Eine Ansteuerung der Lichtquellen ist notwendig, um das Streulicht wellenlängenselektiv mit den Detektoren 40 bis 52 erfassen zu können. Für die Auswertung in der Auswerteinheit 60 wird ein Speicher 62 benötigt zur Speicherung der erfassten Streulichtintensitäten.

Kern der Erfindung sind die Winkelbereiche bzw. Winkelpositionen der Detektoren. Diese wurden gefunden, indem anhand künstlicher Partikel mit bekannter Partikelform und bekannter Größenverteilung berechnet wurde, zu welchem Satz Detektorpositionen maximale Differenzen in den Detektorsignalen auftreten, so dass im normalen Betrieb dann verschiedene Größenverteilungen optimal voneinander unterschieden und somit bestimmt werden können. Dazu wurden zu 105 Partikelformen und 9 verschiedene Größenverteilungen und drei verschiedenen Wellenlängen im Winkelbereich von 0° bis 180° die differentiellen Streuquerschnitte berechnet. Schließlich wurde berechnet, bei welchem Satz von sechs Detektorwinkeln das beste Ergebnis auftritt, also die vorgenannten maximalen Differenzen in den Detektorsignalen auftreten. Das Ergebnis sind die oben genannten Detektorwinkelbereiche bzw. Detektorwinkel α.

Die verstärkten Detektorsignale werden mittels Testpartikel mit bekannter Größenverteilung und bekannten optischen Eigenschaften auf physikalische Einheiten (differentieller Streukoeffizient) kalibriert.

Aus den differentiellen Streuquerschnitten wird in der Auswerteeinheit 60 nach abgelegten und aus der Streutheorie bekannten Algorithmen für die verwendeten drei Wellenlängen (beispielsweise 405 nm, 638 nm und 915 nm) eine Partikelgrößenverteilung bestimmt. Und aus der Partikelgrößenverteilung werden durch entsprechende Integration über die Partikelgröße schließlich die Feinstaubmassenanteile PM₁, PM_{2.5} und PM₁₀ sowie die totale Partikelmassenkonzentration erhalten.

Mit dem erfindungsgemäßen Analysegerät können somit mit absoluter Kalibrierung kontinuierlich die Partikelgrößenverteilung und die Feinstaubmassenanteile PMₓ bestimmt werden. Die Bestimmung der Partikelgrößenverteilung basiert also auf Algorithmen und ist damit vorteilhafterweise unabhängig von der Art der Partikel.

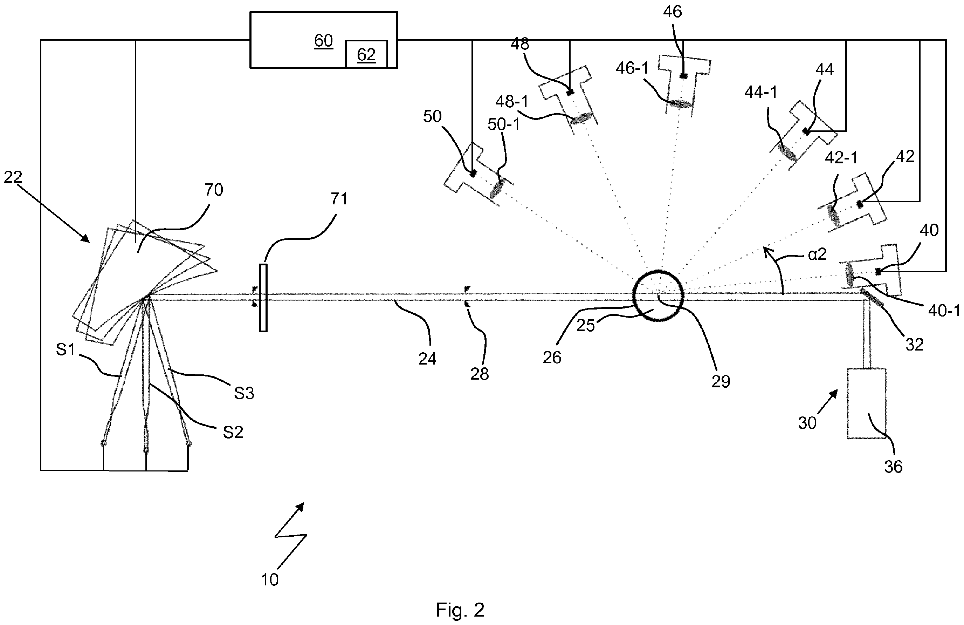

In einer anderen Ausführungsform kann der oben beschriebene erste Detektor 40, der dort als CMOS Zeilensensor ausgebildet ist, als hoch sensitiver Photodetektor ausgebildet sein, der durch einen Neutraldichtefilter abgeschirmt sein sollte, um das einfallende Laserlicht und Beugungseffekte, die von strahlbegrenzenden Blenden herrühren, abzufangen. Dies ist in Fig. 2 angedeutet. Dann kann wegen der besseren Platzverhältnisse eventuell auch die Lichtabsorptionsvorrichtung 30 einfacher ausgestaltet werden, z.B. durch nur ein Neutraldichtefilter 32 und die Lichtfalle 36.

In einer ebenfalls in Fig. 2 dargestellten Ausführungsform der Erfindung ist die Vorrichtung zur Strahlvereinigung 22 nicht mit feststehenden Spiegeln realisiert, sondern mittels eines verschwenkbaren Parabolspiegels 70, der dann von der Steuer- und Auswerteeinheit 60 angesteuert wird und der je nach Schwenkwinkelstellung einen jeden der drei Lichtstrahlen S1, S2, S3 auf den einen optischen Weg 24 führen kann. Eine solche Vorrichtung 22 mit verschwenkbarem Parabolspiegel 70 benötigt weniger Bauraum und weniger optische Bauteile. Das von den Laserdioden ausgesendete unterschiedlich und undefiniert polarisierte Licht wird mittels eines breitbandigen Drahtgitterpolarisators 71 horizontal (oder waagerecht) zur Streuebene linear polarisiert.

## Patentansprüche

1. Optisches Analysegerät (10) zur Bestimmung von Feinstaub mit
- drei Lichtquellen (L1, L2, L3) zur Aussendung von drei Sendelichtstrahlen (S1, S2, S3) mit unterschiedlichen Wellenlängen,- einer Vorrichtung (22) zur Vereinigung der drei Sendelichtstrahlen (S1, S2, S3) auf einen gemeinsamen optischen Weg (24),
- einem Messvolumen (25) in das mit Feinstaub beladenes Gas einleitbar ist und in dem das Sendelicht (S1, S2, S3) auf das zu messende Gas trifft und an dem Feinstaub gestreut wird, und in dem Messvolumen ein Mittelpunkt (29) definiert ist, von dem aus Streuwinkel (α) definiert sind, wobei die optische Achse in Vorwärtsstreurichtung den Streuwinkel 0° definiert,
- einer Lichtabsorptionsvorrichtung (30) bei 0°, die ungestreutes Licht erfasst,
- einem ersten Detektor (40), der zwischen 0° und 6° und unmittelbar neben der Lichtabsorptionsvorrichtung (30) angeordnet ist und der Streulicht in Vorwärtsrichtung erfasst,
- einem zweiten Detektor (42), der in einem zweiten Streuwinkel bei 28° angeordnet ist,
- einem dritten Detektor (44), der in einem dritten Streuwinkel bei 61° angeordnet ist,
- einem vierten Detektor (46), der in einem vierten Streuwinkel bei 96° angeordnet ist,
- einem fünften Detektor (48), der in einem fünften Streuwinkel bei 128° angeordnet ist,
- einem sechsten Detektor (50), der in einem sechsten Streuwinkel bei 155° angeordnet ist, so dass die Detektoren Streulicht in dem jeweiligen Winkel erfassen,
- wobei jeder Detektor (40, 42, 44, 46, 48, 50) eine Optik (40-1, 42-1, 44-1, 46-1, 48-1, 50-1) aufweist, die das Licht aus einem Streuwinkeltoleranzbereich von +/- 1° erfasst und auf den jeweiligen Detektor fokussiert,
- einer Steuer- und Auswerteeinheit (60), die die Lichtquellen (L1, L2, L3) ansteuert, so dass das Streulicht wellenlängenselektiv von den Detektoren (40, 42, 44, 46, 48, 50) erfasst wird,
- einem Speicher (62) zur Speicherung der erfassten Streulichtintensitäten,
- und die Steuer- und Auswerteeinheit (60) derart ausgebildet ist, dass aus den Streulichtintensitäten die Größenverteilung des Feinstaubs und Feinstaubmassenanteile bestimmbar sind.

2. Analysegerät nach Anspruch 1, **dadurch gekennzeichnet, dass** drei Polfilter (P1, P2, P3), deren Polarisationsrichtungen gleich ausgerichtet sind, vorgesehen sind zur Linearpolarisation des Sendelichts.

3. Analysegerät nach einem der vorhergehenden Ansprüche, **dadurch gekennzeichnet, dass** ein siebter Detektor in einem siebten Streuwinkelbereich zwischen 166° und 180°, insbesondere bei 170°, angeordnet ist.

4. Analysegerät nach einem der vorhergehenden Ansprüche, **dadurch gekennzeichnet, dass** das Sendelicht linear polarisiert ist.

5. Analysegerät nach einem der vorhergehenden Ansprüche, **dadurch gekennzeichnet, dass** der erste Detektor als CMOS Zeilensensor ausgebildet ist.

6. Analysegerät nach einem der vorhergehenden Ansprüche, **dadurch gekennzeichnet, dass** die Vorrichtung zur Strahlvereinigung entweder mit feststehenden Spiegeln realisiert ist oder einen verschwenkbaren Parabolspiegel aufweist, der je nach Schwenkwinkelstellung das Sendelicht einer jeden der drei Lichtquellen auf den einen optischen Weg führen kann.

7. Analysegerät nach einem der vorhergehenden Ansprüche, **dadurch gekennzeichnet, dass** die Wellenlängen der Lichtquellen im ultravioletten, sichtbaren und infraroten Bereich liegen.

8. Analysegerät nach einem der vorhergehenden Ansprüche, **dadurch gekennzeichnet, dass** die Sendelichtstrahlen aufgeweitet sind und im Bereich des Messvolumens einen Durchmesser von etwa 4 mm aufweisen.

## Claims

1. Optical analysis device (10) for the determination of fine dust with
- three light sources (L1, L2, L3) for emitting three emitted light beams (S1, S2, S3) with different wavelengths,
- a device (22) for combining the three emitted light beams (S1, S2, S3) on a common optical path (24),
- a measuring volume (25) into which gas laden with fine dust can be introduced and in which the emitted light (S1, S2, S3) strikes the gas to be measured and at which fine dust is scattered, and in the measuring volume a centre (29) is defined from which scattering angles (α) are defined, the optical axis defining the scattering angle 0° in the forward scattering direction,
- a light absorbing device (30) at 0° which detects unscattered light,
- a first detector (40) disposed between 0° and 6° and immediately adjacent the light absorbing device (30) and detecting scattered light in the forward direction,
- a second detector (42) arranged at a second scattering angle at 28°,
- a third detector (44) arranged at a third scattering angle at 61°,
- a fourth detector (46) arranged at a fourth scattering angle at 96°,
- a fifth detector (48) arranged at a fifth scattering angle at 128°,
- a sixth detector (50) arranged at a sixth scattering angle at 155° so that the detectors detect scattered light at the respective angle,
- wherein each detector (40, 42, 44, 46, 48, 50) has an optical system (40-1, 42-1, 44-1, 46-1, 48-1, 50-1) which detects the light from a scattering angle tolerance range of +/- 1° and focuses it onto the respective detector,
- a control and evaluation unit (60) which drives the light sources (L1, L2, L3) so that the scattered light is detected wavelength-selectively by the detectors (40, 42, 44, 46, 48, 50),
- a memory (62) for storing the detected scattered light intensities,
- and the control and evaluation unit (60) is designed such that the size distribution of the fine dust and fine dust mass fractions can be determined from the scattered light intensities.

2. Analysis device according to claim 1, **characterized in that** three polarizing filters (P1, P2, P3), whose polarization directions are aligned in the same way, are provided for linear polarization of the emitted light.

3. Analysis device according to one of the preceding claims, **characterized in that** a seventh detector is arranged in a seventh scattering angle range between 166° and 180°, in particular at 170°.

4. Analysis device according to one of the preceding claims, **characterized in that** the emitted light is linearly polarized.

5. Analysis device according to one of the preceding claims, **characterized in that** the first detector is designed as a CMOS line sensor.

6. Analysis device according to one of the preceding claims, **characterized in that** the device for combining the emitted light beams is either realized with fixed mirrors or has a pivotable parabolic mirror which, depending on the pivoting angle position, can guide the emitted light of each of the three light sources onto the single optical path.

7. Analysis device according to one of the preceding claims, **characterized in that** the wavelengths of the light sources are in the ultraviolet, visible and infrared ranges.

8. Analysis device according to one of the preceding claims, **characterized in that** the emitted light beams are widened and have a diameter of approximately 4 mm in the region of the measuring volume.

## Revendications

1. Dispositif d'analyse optique (10) pour la détermination des poussières fines avec
- trois sources lumineuses (L1, L2, L3) pour émettre trois faisceaux lumineux émis (S1, S2, S3) de longueurs d'onde différentes,
- un dispositif (22) pour combiner les trois faisceaux lumineux émis (S1, S2, S3) sur un trajet optique commun (24),
- un volume de mesure (25) dans lequel du gaz chargé de poussière fine peut être introduit et dans lequel la lumière émise (S1, S2, S3) frappe le gaz à mesurer et dans lequel de la poussière fine est dispersée, et dans le volume de mesure un centre (29) est défini à partir duquel des angles de diffusion (α) sont définis, l'axe optique définissant l'angle de diffusion 0° dans le sens avant,
- un dispositif d'absorption de lumière (30) à 0° qui détecte la lumière non diffusée,
- un premier détecteur (40) disposé entre 0° et 6° et immédiatement adjacent au dispositif d'absorption de lumière (30) et détectant la lumière diffusée dans la direction avant,
- un deuxième détecteur (42) disposé dans un deuxième angle de diffusion à 28°,
- un troisième détecteur (44) disposé dans un troisième angle de diffusion à 61°,
- un quatrième détecteur (46) disposé dans un quatrième angle de diffusion à 96°,
- un cinquième détecteur (48) disposé dans un cinquième angle de diffusion à 128°,
- un sixième détecteur (50) disposé dans un sixième angle de diffusion à 155° de sorte que les détecteurs détectent la lumière diffusée à l'angle respectif,
- dans lequel chaque détecteur (40, 42, 44, 46, 48, 48, 50) possède un système optique (40-1, 42-1, 44-1, 44-1, 46-1, 48-1, 50-1) qui détecte la lumière dans une plage de tolérance angulaire de diffusion de +/- 1° et la concentre sur le détecteur respectif,
- une unité de commande et d'exploitation (60) qui commande les sources de lumière (L1, L2, L3) de sorte que la lumière diffusée soit détectée de manière sélective en longueur d'onde par les détecteurs (40, 42, 44, 46, 48, 50),
- une mémoire (62) pour stocker les intensités de lumière diffusée détectées,
- et l'unité de commande et d'exploitation (60) est conçue de telle sorte que la répartition granulométrique des poussières fines et des fractions de masse de poussières fines peuvent être déterminées à partir des intensités de lumière diffusée.

2. Dispositif d'analyse selon la revendication 1, **caractérisé en ce que** trois filtres polarisants (P1, P2, P3), dont les directions de polarisation sont alignées de la même manière, sont prévus pour la polarisation linéaire de la lumière émise.

3. Dispositif d'analyse selon l'une des revendications précédentes, **caractérisé en ce qu'**un septième détecteur est disposé dans un septième angle de diffusion compris entre 166° et 180°, en particulier à 170°.

4. Dispositif d'analyse selon l'une des revendications précédentes, **caractérisé en ce que** la lumière émise est polarisée linéairement.

5. Dispositif d'analyse selon l'une des revendications précédentes, **caractérisé en ce que** le premier détecteur est conçu comme un capteur linéaire CMOS.

6. Dispositif d'analyse selon l'une des revendications précédentes, **caractérisé en ce que** le dispositif de combinaison des faisceaux lumineux émis est réalisé soit avec des miroirs fixes, soit avec un miroir parabolique pivotant qui, selon la position angulaire de pivotement, peut guider la lumière émise par chacune des trois sources lumineuses sur le même trajet optique.

7. Dispositif d'analyse selon l'une des revendications précédentes, **caractérisé en ce que** les longueurs d'onde des sources lumineuses se situent dans les domaines ultraviolet, visible et infrarouge.

8. Dispositif d'analyse selon l'une des revendications précédentes, **caractérisé en ce que** les faisceaux lumineux émis sont élargis et ont un diamètre d'environ 4 mm dans la zone du volume de mesure.
